# EUROPEAN PATENT APPLICATION

(11) **EP 3 546 210 A1**
(43) Date of publication of application: **02.10.2019**
(21) Application number: 18164128.3
(22) Date of filing: 27.03.2018
(51) Int. Cl.: B32B 5/30, B32B 9/02, B32B 29/00, B32B 3/12, B32B 5/22, B32B 7/12, B32B 7/14, B32B 9/00, B32B 27/26, B32B 27/28, B32B 29/04, B32B 29/08, E04C 2/36

(54) **MICA BASED THREE DIMENSIONAL STRUCTURES**

(71) Applicant: COGEBI société anonyme, 1651 Lot (BE)
(72) Inventor: GEERTS, Chris A., 4861BS CHAAM (NL); DEL REY, Francisco, 1348 Ottignies-Louvain-la-Neuve (BE); BOEL, Sandra, 9402 MEERBEKE (BE)
(74) Representative: Pronovem

(57) **Abstract**

The present invention is related to a method for producing a mica paper honeycomb comprising the steps of:
i. providing sheets of partially cured impregnated mica paper (2);
ii. gluing the said sheets (2) along periodic parallel lines (3) for forming an unexpanded, partially cured mica paper honeycomb (1);
iii. expanding the said unexpanded partially cured mica paper honeycomb (1) to obtain an expanded partially cured mica paper honeycomb (4);
cure the expanded partially cured mica paper honeycomb (4) to obtain a mica paper honeycomb.

## Description

### Field of the invention

The present invention is related to a mica based sandwich structures comprising two external sheets separated by a folded core mica structure. The core mica structure being a honeycomb or other folded structure. The invention is also related to the method to produce it, and a precursor product to produce such a honeycomb.

### State of the art

It is known from document BE1002073 to use mica for fabricating Honeycomb sandwich structure having high fire resistance. In this document the honeycomb structure itself is made by assembling sheets of "micanite" by standard methods used in the cardboard industry to produce honeycomb structure. In this document, very few details are given about the precise process to produce said "micanite". It is just said that said "micanite" is sufficiently soft to be formed in a honeycomb structure.

Foldcore sandwich panels consist of a partially folded core, such as those based on the Miura pattern, sandwiched between two unfolded sheets. They have been investigated in the aerospace and composite engineering industries as a potential substitute to honeycomb panels, as they possess a number of favourable properties that are not possible with other types of high-performance sandwich panels. Such structure, and the method to produce such structure in paper is for example described in document GB 1390 132.

As a matter of fact, mica paper can be purely mineral structure having very high fire resistance and high rigidity or sometimes, polymeric matrix having high mica content such as the so called Nomex® form Dupont. When having a high organic content, the mica paper can be easily formed. When the paper is purely mineral, it has a tendency to easily delaminate, and it becomes usually too brittle to be formed anymore.

But, having a high organic content (such as the aramid content in Nomex®) with relative low melting (or decomposition) point (in comparison with the melting temperature of Mica itself) strongly degrades the fire behaviour of those mica papers.

So, it is desirable to be able to produce a honeycomb structure having a fire resistance close to that mineral mica paper, but being sufficiently soft to be formed into said honeycomb structure.

### Summary of the invention

A first aspect of the present invention discloses a method for producing a folded mica paper to be used as a core of a foldcore sandwich panel, or a sandwich honeycomb structure comprising the steps of:
i. providing sheets of partially cured impregnated mica paper
ii. folding the partially cured mica paper into either a folded core or a honeycomb partially cured mica paper;
iii. cure the folded partially cured mica paper honeycomb to obtain a mica paper honeycomb.

Preferred embodiments of the present invention disclose at least one, or an appropriate combination of the following features:
- the folded partially cured mica paper is in the form of a honeycomb structure, and the method for producing it comprises the additional steps of gluing the said partially cured mica sheets along periodic parallel lines for forming an unexpanded, partially cured mica paper honeycomb and expanding the said unexpanded partially cured mica paper honeycomb to obtain an expanded partially cured mica paper honeycomb;
- sheet(s) preferably comprising partially or fully cured mica paper, are glued on top and/or on bottom of the partially or fully cured folded mica paper honeycomb to form a sandwich mica honeycomb or mica foldedcore structure (fully or partially cured);
- the partially cured mica paper is obtained by impregnating raw mica paper with 10 to 30% of a silicone based resin along with a curing catalyst;
- the uncured impregnated mica paper is pre-cured at a temperature at least 50°C below full cure temperature;
- the uncured impregnated mica paper is pre-cured at a temperature comprised between 130 to 200°C preferably for curing time comprised between 1 min and 60 min, more preferably between 5 min and 10 min;
- the glue is a silicone based adhesive comprising a thermally, light or UV activated catalyst;
- the cure of step iv is performed at a temperature comprised between 200°C and 350°C, for duration comprised between 1 min and 60 min, more preferably between 5 min and 10 min.

A second aspect of the invention is related to an unexpanded partially cured mica paper honeycomb comprising partially cured impregnated mica sheets.

A third aspect of the invention is related to a foldedcore or honeycomb sanwhich structure comprising a folded or honeycomb partially cured mica paper core sandwiched between two external sheets, preferably at least one of the external sheet(s) comprising a mica paper layer.

### Short description of the drawings

Fig. 1 represents a top view of an unexpanded partially cured mica paper honeycomb according to the invention.
Fig. 2 represents a top view of the expanded partially cured mica paper honeycomb obtained from the unexpanded honeycomb of Fig. 1.
Fig. 3 represents a side view of an expanded mica paper honeycomb sandwiched between two skin layers.
Fig. 4 represents a process for producing an unexpanded partially cured mica paper honeycomb of the invention.
Fig. 5 represents DSC curves of cured (discontinuous line) and partially cured (continuous line) silicone impregnated mica paper.

### Detailed description of the invention

The present invention takes advantage of the change of mechanical and fire resistance properties of uncured, partially cured and cured impregnated mica paper.

By impregnated mica paper, it is meant in the present invention, mineral, substantially pure mica paper impregnated by an organo-mineral resin, said resin improving the inter platelet adhesion, and reducing brittleness of the pure mica paper. The organo-mineral resins are usually siloxane based resins, such as vinyl-siloxane. The preferred resins are vinyl-siloxane based resins.

When impregnating the mica paper with such adhesive the mechanical brittleness of the paper is reduced, but not sufficiently to be easily formed into an expanded honeycomb. So, to improve this mechanical property, it is favourable to partially cure the impregnating resin. This partial cure polymerize the pre-polymer to an extent giving high adhesive properties and high tenacity to the resin.

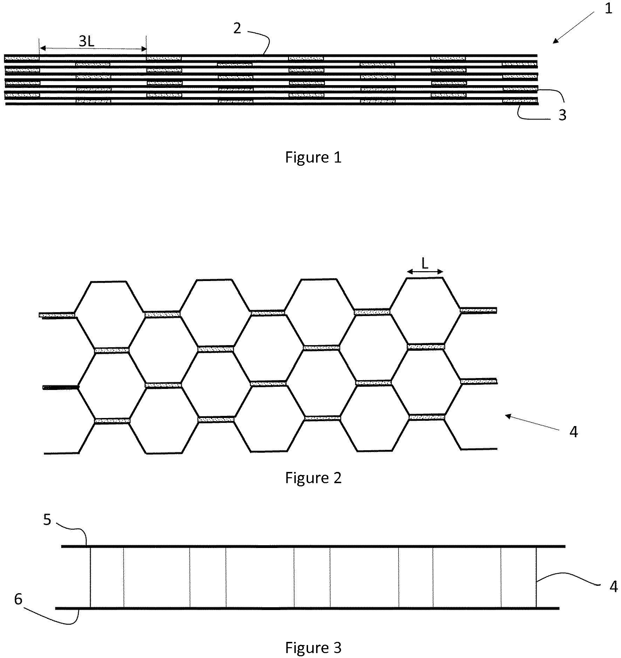

So, the partially cured impregnated resin has ideal mechanical properties to be glued, formed into a flat structure 1 as represented in fig. 1 and then expanded into a honeycomb 4 as represented in fig. 2.

When the impregnating resin is thermally activated, the partial cure is usually obtained with treatment temperature comprised between 60 and 200°C, preferably between 130 and 180°C, depending upon the type polymerisation chemistry (vinyl polymerisation, ... ) and the catalyst used.

The drawback of the partially cured honeycomb is that it too soft for some particular applications wherein high rigidity is needed. Furthermore, the mechanical properties of the obtained structure is subjected to variation when submitted to fire. So, in a second step, when the mica honeycomb is formed in the desired shape, it is submitted to a second curing treatment at higher temperature. Typically, this second treatment is performed at a temperature sufficiently high to fully crosslink the impregnating resin. Such full cross linking usually occur at temperature comprised between 200°C and 350°C.

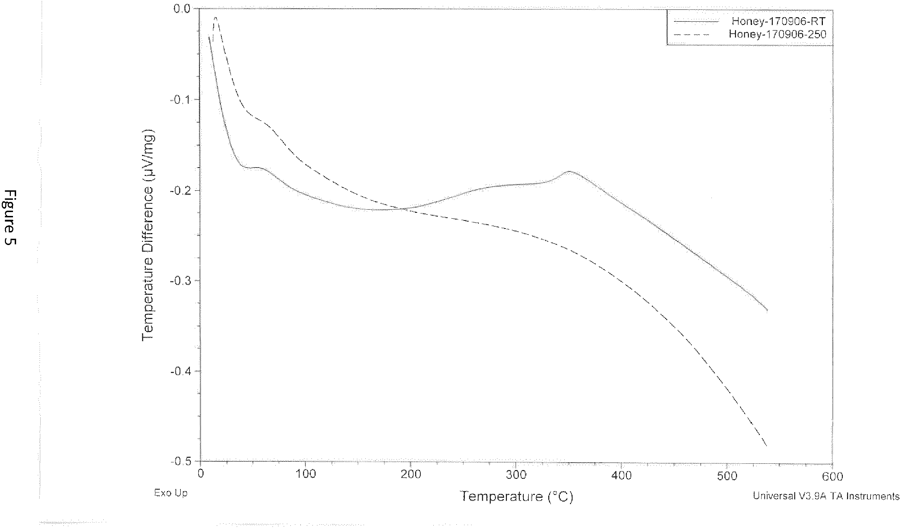

Fig. 5 represents digital scanning calorimetric measurement results of partially cured (continuous line) and fully cured impregnated mica paper. As can be seen on these curves, the partially cured mica exhibit an exothermal reaction with a maximum thermal outflow at around 350°C. This exothermal maximum depends on the particular impregnating resin, catalyst and initiator, and is typically comprised between 200 and 350°C, as stated here above.

Notice that the glues (adhesive) used in the process for producing the honeycomb being also submitted to the final curing thermal treatment, it should sustain the final cure thermal treatment. On the other hand, if the adhesive is thermally activated, it should have an activation temperature below the final curing temperature.

Preferred adhesives are silicone based adhesives comprising a thermally, light or UV activated catalyst, the advantage of these silicone based adhesives exhibiting high temperature resistance, maintaining the integrity of the honeycomb at usual fire temperature.

In many application, the final product should behave as a barrier to fire transmission and should isolate the fire heat transmission. To obtain such a barrier, mica paper 5,6 is advantageously attached on at least one side, preferably on both sides of the honeycomb structure 4. Other fire resistant layers can also be used as skin layers. The gluing of the skin layers, depending on the specific application can either be done before or after the final curing step.

As fire resistance is involved, it is to be noticed that Miura-pattern folding system has the advantage over honeycomb structures of maintaining the mica paper continuity in plane. This improves the burn through resistance of the structure of the invention.

As an advantage of the process of the invention is that the flat, unexpanded partially cured honeycomb can be transported easily from a first production site, and the expanded elsewhere by a final user. This represents a huge logistic advantage.

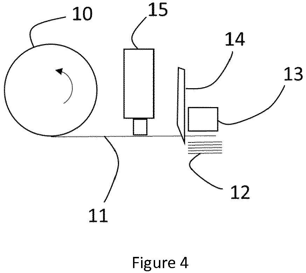

A side view of an example of process for producing the flat unexpanded honeycomb of the invention is represented in Fig. 4. Notice that this figure is only given as an example, and any known suitable process used in the cardboard industry for producing honeycomb can be used as far as the curing sequence according to the invention is fulfilled.

In figure 4, a partially cured mica paper 11 is unwounded from a reel 10. The mica paper then pass in front of a gluing station 15 applying longitudinal stripes of adhesives. The mica paper 11 is then cut into sheets of length corresponding to the height of the final expanded honeycomb.

Between each cut, the forming unexpanded honeycomb 12 is laterally displaced by a distance corresponding to two times the length of a honeycomb side L, in order to obtain the structure represented in fig. 1. The lateral displacement is alternatively in one direction and in the opposite direction.

In order to obtain the structure of figure 1, the adhesive stripes 3 have a width L corresponding to one honeycomb cell side, and they are distant from each other by a distance of times the cell side 3.L .

After cut, the last mica sheet is pressed on top of the forming unexpanded partially cured mica honeycomb.

Eventually, in case of UV or light activated glue, an activation station (not represented) is added at a suitable place, (ideally just before the positioning of the last mica sheet on top of the forming unexpanded honeycomb 12 being formed), a flash of suitable radiation being delivered on the UV activated glue before being pressed on the preceding mica sheet.

### Example

The mica paper was ref. ZP-122 (Phlogopite paper 120 g/m²) commercialised by Cogebi SA. It was impregnated up to 20% of resin by a vinyl-siloxane with a linear molecule crosslinker produced by Waker. The resin to Pt-catalyst ratio was 9:1.

Two adhesives were used to assemble the partially cured mica sheets. Adhesive 1 is a silicone mono-component adhesive with thermal activated catalyst - Semicosil® 987 GR. Adhesive 2 is a silicone adhesive Semicosil 810® with a UV-activated catalyst.

Drying and activation of the impregnation catalyst was done at maximum oven temperature of 170°C. The choice of the impregnation silicone and the relatively low activation temperature allowed the retention of flexibility that is necessary for the expansion.

### Honeycomb formation

Adhesive lines separated by 3 cm were deposited on the impregnated mica paper using Adhesive 1 in the quantity necessary to obtain 4 mm wide lines after pressing. 6 layers were glued by pressing together after alternating the adhesive lines to have a 1.5 cm spacing when seen from top.

Adhesive lines separated by 3 cm were printed on the top impregnated mica paper layer of the 6 layers complex with Adhesive 2. After UV activation of Adhesive 2, seven 6-layer complexes were stacked and pressed together to form a non-expanded honeycomb constituted by 42 layers of 1 cm width. The stiffness of the impregnated paper used at this example after activation of the adhesive lines was 50 N/m according to CEI 60371-2.

The obtained non-expanded honeycomb can be expanded and cured by heating. After expansion (final width was 0.8 of the non-expanded), cells had an approximate diameter of 15 mm and the honeycomb had a density of 29 kg/m³.

After curing the obtained honeycomb for one hour at 250°C , the compression strength is 0.1 MPa and remains at this level after thermal treatment at 350 °C.

After thermal treating one hour at 400 °C, the expanded honeycomb retained 79% of the its compression strength at 300°C.

Figure 5 shows DSC curves of the partially cured (continuous line) and fully cured (dotted line) mica paper of the example. The samples were conditioned to 23°C and 50% relative humidity for two hours before test and the test was done in dry air using a ramp of 10°C/min.

## Claims

1. A method for producing a folded mica paper to be used as a core (4) of a foldcore sandwich panel, or a sandwich honeycomb structure comprising the steps of:
i. providing sheets (2) of partially cured impregnated mica paper;
ii. folding the partially cured mica paper into either a folded core (4) or a honeycomb partially cured mica paper;
iii. cure the folded partially cured mica paper honeycomb to obtain a mica paper honeycomb.

2. The method of claim 1 wherein the folded partially cured mica paper is in the form of a honeycomb structure, and the method for producing it comprises the additional steps of gluing the said partially cured mica sheets along periodic parallel lines for forming an unexpanded, partially cured mica paper honeycomb and expanding the said unexpanded partially cured mica paper honeycomb to obtain an expanded partially cured mica paper honeycomb

3. The method of claim 1 wherein external sheet(s) (5,6) preferably comprising partially or fully cured mica paper, are glued on top and/or on bottom of the partially or fully cured folded mica paper to form a sandwich mica honeycomb or foldedcore structure (fully or partially cured).

4. The method of claim 1 or 2 wherein the partially cured mica paper is obtained by impregnating raw mica paper with 10 to 30% of a silicone based resin along with a curing catalyst.

5. The method of claim 3 wherein the uncured impregnated mica paper is pre-cured at a temperature at least 50°C below full cure temperature.

6. The method of claim 3 wherein the uncured impregnated mica paper is pre-cured at a temperature comprised between 130 to 200°C.

7. The method of any of the previous claims wherein the glue (3) is a silicone based adhesive comprising a thermally, light or UV activated catalyst.

8. The method of any of the previous claims wherein, the cure of step iii is performed at a temperature comprised between 200°C and 350°C.

9. An unexpanded partially cured mica paper honeycomb comprising partially cured impregnated mica sheet.

10. The unexpanded partially cured mica paper honeycomb according to claim 9 wherein the partially cured mica paper exhibit an exothermal reaction at a temperature comprised between 200 and 350°C.
